# EUROPÄISCHE PATENTSCHRIFT

(11) **EP 2 504 540 B1**
(45) Veröffentlichungstag und Bekanntmachung des Hinweises auf die Patenterteilung: **25.06.2014**
(21) Anmeldenummer: 10778973.7
(22) Anmeldetag: 05.11.2010
(51) Int. Cl.: F01N 3/20

(54) **VERFAHREN ZUM BETRIEB EINER FÖRDERVORRICHTUNG FÜR EIN REDUKTIONSMITTEL**
METHOD FOR OPERATING A SYSTEM FOR SUPPLYING REDUCING AGENT
PROCÉDÉ DE FONCTIONEMENT D'UN DISPOSITIF D'ALIMENTATION D'UN MOYEN DE REDUCTION

(30) Priorität: 27.11.2009 DE 102009056181
(43) Veröffentlichungstag der Anmeldung: 03.10.2012
(73) Patentinhaber: Emitec Gesellschaft für Emissionstechnologie mbH, 53797 Lohmar (DE)
(72) Erfinder: HODGSON, Jan, 53840 Troisdorf (DE); BAUER, Peter, 95505 Immenreuth (DE)
(74) Vertreter: Rössler, Matthias
(86) Internationale Anmeldenummer: PCT/EP2010/066851
(87) Internationale Veröffentlichungsnummer: WO 2011/064076

(56) Entgegenhaltungen:
- WO-A1-2008/031421
- WO-A1-2010/066564
- WO-A2-2010/119116
- DE-A1- 10 047 516
- DE-A1-102007 030 555

## Beschreibung

Die Erfindung betrifft ein Verfahren zum Betrieb einer Fördervorrichtung für ein Reduktionsmittel. Insbesondere betrifft die Erfindung ein Verfahren zum Betrieb einer Fördervorrichtung für ein Reduktionsmittel ohne Rüchlaufleitung.

Das Abgas von Verbrennungskraftmaschinen weist regelmäßig Stoffe auf, deren Emissionen in die Umwelt unerwünscht sind. Beispielsweise dürfen in vielen Ländern Stickstoffoxidverbindungen (NOx) nur bis zu einem gewissen Grenzwert im Abgas von Verbrennungskraftmaschinen enthalten sein. Neben innermotorischen Maßnahmen, mit denen durch Wahl eines möglichst geeigneten Betriebspunktes der Verbrennungskraftmaschine die Emission von Stickstoffoxidverbindungen vermindert werden kann, haben sich Nachbehandlungsmethoden etabliert, mit denen eine weitere Absenkung der Stickstoffoxidemissionen möglich ist.

Eine Möglichkeit, die Stickstoffoxidemissionen weiter zu reduzieren, ist die sogenannte selektive katalytische Reduktion (SCR: "*selective catalytic reduction*"). Hierbei erfolgt eine selektive Reduktion der Stickstoffoxide zu molekularem Stickstoff (N₂) unter Einsatz eines Reduktionsmittels. Ein mögliches Reduktionsmittel ist Ammoniak (NH₃). Ammoniak wird dabei oft nicht in Form von Ammoniak gelagert, vielmehr wird ein Ammoniak-Vorläufer bevorratet, der im Bedarfsfall in Ammoniak umgesetzt wird. Man spricht von einem Reduktionsmittelvorläufer. Ein wichtiger möglicher Reduktionsmittelvorläufer, der in Kraftfahrzeugen eingesetzt werden kann, ist Harnstoff ((NH₂)₂CO). Bevorzugt wird Harnstoff in Form einer Harnstoff-Wasser-Lösung bevorratet. Harnstoff und insbesondere Harnstoff-Wasser-Lösung ist gesundheitlich unbedenklich, einfach zu verteilen, zu lagern und zu dosieren. Unter dem Handelsnamen "AdBlue" wird eine solche Harnstoff-Wasser-Lösung mit einem Harnstoff-Gehalt von 32,5 % vertrieben.

Eine Harnstoff-Wasser-Lösung wird für gewöhnlich in einem Tanksystem im Kraftfahrzeug mitgeführt und mit einem Einspritzsystem mit Pumpe und Injektor in das Abgassystem portioniert zudosiert.

Aus dem Stand der Technik bekannte Fördervorrichtungen zur Förderung von Reduktionsmittel aus einem Tanksystem in ein Abgassystem weisen eine Förderleitung vom Tanksystem hin zum Abgassystem auf. Zusätzlich ist eine Rücklaufleitung vorgesehen, welche von einem Bereich stromaufwärts einer Pumpe von der Förderleitung abzweigt und zurück in den Tank verläuft. Grund für diese Rückführleitung ist zum einen, dass durch eine derartige Rückführleitung eine Kreisförderung von Reduktionsmittel möglich ist, durch welche die Fördervorrichtung effizient mit Reduktionsmittel befüllt werden kann und Luftblasen aus der Fördervorrichtung hinaus gefördert werden können. Zum anderen kann durch die Rücklaufleitung beim Einfrieren von Reduktionsmittel eine Druckentlastung in der Förderleitung erfolgen.

Aufgrund neuer, flexibler Materialien für die Förderleitung ist eine Rücklaufleitung wegen des Eisdrucks beim Einfrieren nicht mehr unbedingt erforderlich. Die Notwendigkeit einer Rücklaufleitung für die Entlüftung durch eine Kreisförderung von Reduktionsmittel, so dass eine Luftblase aus der Fördervorrichtung hinausgefürdert werden kann, bleibt allerdings bestehen. Eine Luftblase in der Fördervorrichtung zu vermeiden ist regelmäßig wichtig, damit am Injektor zur Zufuhr von Reduktionsmittel in eine Abgasbehandlungsvorrichtung Reduktionsmittel zur Verfügung steht.

Die DE-A1-10 2007 030 555 offenbart eine Fördervorrichtung und ein Verfahren zum Betrieb einer Fördervorrichtung für ein Reduktionsmittel. Die Fördervorrichtung hat einen Tank für das Reduktionsmittel, eine Einspritzdüse zur Zugabe des flüssigem Reduktionsmittels in eine Abgasbehandlungsvorrichtung einer Verbrennungskraftmaschine und eine Reduktionsmittelleitung, die vom Tank zu der Einspritzdüse verläuft. An der Reduktionsmittelleitung sind eine Einspritzpumpenanordnung zur Förderung von Reduktionsmittel und ein Drucksensor angeordnet. Mit dem Drucksensor kann ein Druck des Reduktionsmittels an der Einspritzdüse festgestellt werden. Es ist offenbart, dass die Fördervorrichtung beim Betriebsstart entlüftet wird. Problematisch ist, dass kein Entlüftungsverfahren offenbart ist, das unabhängig vom Betriebsstart der Fördervorrichtung durchgeführt werden kann. Außerdem ist es problematisch, dass eine Luftblase in der Fördervorrichtung bzw. in der Reduktionsmittelleitung nicht aktiv erkannt werden kann.

Die DE-A1-100 47 516 offenbart ein Verfahren zur Dosierung eines Reduktionsmittels, insbesondere eines Harnstoffs beziehungsweise einer Harnstoff-Wasser-Lösung, bei dem das Reduktionsmittel über eine Leitung und ein die Dosierung regelndes Stellglied, insbesondere ein Dosierventil einer Katalysatoranordnung zur Entfernung von Stickoxiden aus den Abgasen eines Dieselmotors zugeführt wird, wobei ein durch Gaseinschlüsse bedingter Druckabfall in der Leitung erkannt und die Leitung über ein Stellglied entlüftet wird. Problematisch bei diesem Verfahren ist das durch Gaseinschlüsse ein nicht näher spezifizierter Druckabfall auftritt, der zu einer Unterbrechung der regulären Bereitstellung von Reduktionsmittel führt. Insbesondere ist nicht zu erkennen welche Menge an Reduktionsmittel in die Abgasbehandlungsvorrichtung gelangt während entlüftet wird-Außerdem könnten Ungenauigkeiten in der Dosierung von Reduktionsmittel aufgrund des nicht näher spezifizierten (unbekannten) Druckabfalls auftreten.

Ausgehend von diesem Stand der Technik ist es Aufgabe der hier vorliegenden Erfindung, die im Zusamanenhang mit dem Stand der Technik geschilderten technischen Probleme zu lindern. Es soll insbesondere ein Verfahren offenbart werden, mit welchem eine Fördervorrichtung ohne Rücklaufleitung derart betrieben werden kann, dass eine geeignete Versorgung einer Abgasbehandlungsvorrichtung mit Reduktionsmittel sichergestellt werden kann.

Diese Aufgaben werden gelöst mit einem Verfahren gemäß den Merkmalen des Patentanspruchs 1. Weitere vorteilhafte Ausgestaltungen des Verfahrens sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Das erfindungsgemäße Verfahren ist ein Verfahren zum Betrieb einer Fördervorrichtung für ein Reduktionsmittel mit einem Tank für ein flüssiges Reduktionsmittel, einem Injektor zur Zugabe des flüssigen Reduktionsmittels in eine Abgasbehandlungsvorrichtung, einer Verbrennungskraftmaschine und einer Reduktionsmittelleitung, die vom Tank zum Injektor verläuft, in welcher mindestens eine Pumpe zur Förderung von Reduktionsmittel mit einer Förderrichtung vom Tank zum Injektor und mindestens ein Drucksensor angeordnet sind, aufweisend zumindest folgende Schritte:
a) Feststellen und Bereitstellen eines geeigneten und mit der Pumpe erreichbaren Versorgungsdrucks für den Injektor in der Fördervorrichtung;
b) Berechnen einer Injektoröffnungszeit aus einer festgelegten Einspritzmenge und dem erreichbaren Versorgungsdruck; und
c) Öffnen des Injektors mit der berechneten Injektoröffnungszeit, wobei zu einem vorgegebenen Zeitpunkt eine Entlüftungsprozedur durchgeführt wird, aufweisend zumindest die folgenden Schritte:
   i) Bestimmen einer Ist-Steigung einer Druck-Fördervolumen-Kennlinie der Fördervorrichtung;
   ii) Berechnen eines Luftblasenvolumens durch Vergleich der bestimmten Steigung mit einer Soll-Steigung; und
   iii) Fördern eines Fördervolumens durch den Injektor, wenn das in Schritt ii) berechnete Luftblasenvolumen größer ist als ein maximal zulässiges Luftblasenvolumen.

Im Rahmen des erfindungsgemäßen Verfahrens ist mit Reduktionsmittel zum einen ein (flüssiges) Reduktionsmittel (insbesondere Ammoniak) und/oder ein (flüssiger) Reduktionsmittelvorläufer (insbesondere Harnstoff bzw. Harnstoff-Wasser-Lösung) gemeint.

Dem erfindungsgemäßen Verfahren liegt die Überlegung zugrunde, dass eine in der Fördervorrichtung enthaltene Luftblase bei einer Fördervorrichtung, welche über keine Rücklaufleitung verfügt und bei der eine Förderung von Reduktionsmittel lediglich unidirektional vom Tank zum Injektor möglich ist, nur über den Injektor hinausgeführt werden kann. So gelangt die Luftblase in das Abgassystem einer Verbrennungskraftmaschine.

Dass eine derartige Fördervorrichtung nur unidirektional mit einer Förderrichtung vom Tank zum Injektor betrieben wird, liegt z. B. daran, dass die bevorzugten Pumpen regelmäßig selbst öffnende und schließende Ventile aufweisen, welche lediglich eine vorbestimmte Förderrichtung der Pumpe ermöglichen.

Bei dem erfindungsgemäßen Verfahren ist es einerseits Zielsetzung, eine Luftblase aus der Fördervorrichtung durch den Injektor hinaus zu befördern, andererseits soll dabei möglichst wenig Verlust an Reduktionsmittel auftreten. Ein gewisses Maß an Verlust von Reduktionsmittel in die Abgasbehandlungsvorrichtung wird im Rahmen des erfindungsgemäßen Verfahrens jedoch toleriert.

Das erfindungsgemäße Verfahren umfasst einen "regulären Betriebsmodus", umfassend die Verfahrensschritte a) bis c) sowie eine gelegentlich durchgeführte Entlüftungsprozedur umfassend die Verfahrensschritte i) bis iii). Die Entlüftungsprozedur geht häufig mit einer aus der Fördervorrichtung in das Abgassystem geförderten Verlustmenge an Reduktionsmittel einher, so dass die Entlüftungsprozedur nur dann durchgeführt werden sollte, wenn eine den regulären Betriebsmodus störende Luftblase identifiziert wird. Der reguläre Betriebsmodus der Fördervorrichtung gemäß den Schritten a) bis c) wird so durchgeführt, dass dieser zumindest unter bestimmten Umständen auch bei Vorliegen einer Luftblase in der Fördervorrichtung durchgeführt werden kann, ohne dass die Entlüftungsprozedur eingeleitet werden muss.

Grundsätzlich kann festgestellt werden, dass der reguläre Betriebsmodus in den Schritten a) bis c) ohne Entlüftung aufrecht erhalten werden kann, wenn eine Luftblase im Ansaugbereich der Fördervorrichtung und/oder im Bereich der Pumpe der Fördervorrichtung vorliegt. Die Entlüftungsprozedur gemäß den Schritten i) bis iii) muss nur durchgeführt werden, wenn eine Luftblase in Fördervorrichtung hinter der Pumpe zwischen Pumpe und Injektor vorliegt, weil dann die Gefahr besteht, dass kein Reduktionsmittel am Injektor zur Verfügung steht.

Nachfolgend sollen die Verfahrensschritte a) bis c) bzw. i) bis iii) genauer erläutert werden. In Schritt a) wird ein erreichbarer Versorgungsdruck festgestellt und durch die Pumpe für den Injektor bereitgestellt. Eine pulsativ arbeitende Pumpe, in welcher eine Luftblase vorliegt, kann nur einen gegenüber dem üblichen Versorgungsdruck reduzierten Versorgungsdruck erreichen. Dieser ergibt sich aus dem Verhältnis des maximalen Volumens innerhalb der Pumpkammer der Pumpe und des minimalen Volumens innerhalb der Pumpkammer der Pumpe. Dies liegt daran, dass bei Vorliegen einer Luftblase in der Pumpe, bevor tatsächlich Fluid durch die Pumpe gefördert wird, zunächst eine Kompression der Luftblase erfolgt. Wenn die Luftblase eine bestimmte Größe übersteigt, ist die Pumpe nicht mehr in der Lage, einen bestimmten Druck zu erzeugen. Die Fähigkeit der Pumpe, einen vorgegebenen Versorgungsdruck bereitzustellen, wird deswegen in Schritt a) überprüft. Der Versorgungsdruck wird so festgelegt, dass die Pumpe ihn erreichen kann und gleichzeitig auch noch eine signifikante Förderleistung der Pumpe vorliegt. Typischerweise wird der geeignete Versorgungsdruck um 10 %, vorzugsweise 20 % und insbesondere bevorzugt 50 % unterhalb des maximal erreichbaren Förderdrucks der Pumpe festgelegt. So kann eine ausreichend effiziente Bereitstellung von unter Druck stehendem Reduktionsmittel mit der Fördervorrichtung sichergestellt werden, ohne dass die Pumpe wegen der Kompression einer Luftblase lediglich Verlustwärme erzeugt.

Anschließend erfolgt in Schritt b) das Berechnen einer Injektoröffnungszeit aus einer festgelegten Einspritzmenge und dem geeigneten bzw. erreichbaren Versorgungsdruck. Gegebenenfalls kann in Schritt b) zusätzlich noch die zur Verfügung stehende Öffnungsspannung zur elektrischen Ansteuerung des Injektors und/oder die Temperatur des Systems und/oder des Reduktionsmittels berücksichtigt werden. Die zur Verfügung stehende (elektrische) Öffnungsspannung bestimmt, wie weit und/oder wie schnell der Injektor öffnet und hat damit einen Einfluss darauf, wie groß die zugeführte Menge an Reduktionsmittel ist. Die Temperatur des Systems und/oder des Reduktionsmittels beeinflusst beispielsweise die Viskosität und/oder das Volumen des Reduktionsmittels, so dass auch die Temperatur einen Einfluss auf die zugeführte Reduktionsmittelmenge hat. Die Injektoröffnungszeit gibt regelmäßig die durch den Injektor der Abgasbehandlungsvorrichtung zugeführte Reduktionsmittelmenge vor. Der Zusammenhang zwischen zugeführter Reduktionsmittelmenge und der Öffnungszeit des Injektors verändert sich unter Anderem je nachdem, welcher Versorgungsdruck hinter dem Injektor in der Fördervorrichtung anliegt. Aus diesem Grunde muss bei Berechnung einer entsprechenden Injektoröffnungszeit der in Schritt a) festgestellte zur Verfügung stehende Versorgungsdrucks berücksichtigt werden.

Anschließend erfolgt in Schritt c) das Öffnen des Injektors mit der berechneten Injektoröffnungszeit, um die benötigte Einspritzmenge an Reduktionsmittel der Abgasbehandlungsvorrichtung zuzuführen.

Zu einem vorgegebenen Zeitpunkt wird eine Entlüftungsprozedur, umfassend die Schritte i) bis iii), durchgeführt. Ein entsprechender vorgegebener Zeitpunkt kann beispielsweise bei jeder Durchführung der Verfahrensschritte a) bis c) des regulären Betriebsmodus vorliegen.

In Schritt i) wird dazu zunächst die Steigung einer Druckfördervolumenkennlinie bestimmt. Eine Fördervorrichtung weist regelmäßig eine gewisse Elastizität auf, welche durch die Elastizität der Leitungen sowie der einzelnen Komponenten gegeben ist. Aus diesem Grunde erfolgt in einer Fördervorrichtung eine bestimmte Drucksteigerung, wenn die Pumpe bei geschlossenem Injektor ein bestimmtes Volumen an Reduktionsmittel fördert. Wenn in der Fördervorrichtung zwischen Pumpe und Injektor eine Luftblase vorliegt, wirkt diese wie ein elastisches Bauteil. Aus diesem Grunde wird die Steigerung einer Druck-Fördervolumen-Kennlinie der Fördervorrichtung geringer, wenn zwischen Pumpe und Injektor in der Fördervorrichtung eine Luftblase vorliegt. Genau diese Steigung, die von der Luftblase abhängt, wird in Schritt i) bestimmt. Die Bestimmung einer Steigung einer Druckfördervolumenkennlinie ist hier nur eine Vereinfachung der tatsächlichen Situation. Betreffend den Zusammenhang zwischen Druck und Fördervolumen gibt es neben der Größe einer Luftblase weitere Quereinflüsse, die vorteilhafterweise ebenfalls bekannt sein sollten, um die Größe einer Luftblase besonders genau bestimmen zu können. Hierzu zählt beispielsweise die Öffnungszeit der Injektoren. Aufgrund der von der Temperatur beeinflussten Viskosität bzw. Volumens des Reduktionsmittels ist das Fördervolumen bei gleichem Druck und bei gleichem Luftblasenvolumen gegebenenfalls bei großen Öffnungszeiten größer als bei kleinen Öffnungszeiten. Deshalb kann vorteilhafterweise (ggf. anstatt einer Steigung einer Druck-Volumenkennlinie) auch ein Gradient in einem mehrdimensionalen Kennfeld bestimmt werden, welches die Zusammenhänge zwischen Luftblasenvolumen, Druck und Fördervolumen, sowie auftretenden Quereinflüssen wiedergibt. In Schritt ii) erfolgt dann eine Berechnung des Luftblasenvolumens durch Vergleich der in Schritt i) bestimmten Ist-Steigung und der Soll-Steigung der Druck-Fördervolumen-Kennlinie der Fördervorrichtung, welche sich aus der Elastizität der Leitungen der Fördervorrichtung ergibt. Aufgrund dieses Luftblasenvolumens wird dann ein Fördervolumen festgelegt, welches im Rahmen der Entlüftungsprozedur durch den Injektor gefördert wird, damit die Luftblase komplett aus der Fördervorrichtung hinausgefördert wird und/oder zumindest in ihrer Größe deutlich verkleinert wird. Dieses Fördervolumen wird in Schritt iii) durch den Injektor gefördert. Wenn in Schritt ii) ein Luftblasenvolumen berechnet wurde, welches den regulären Betriebsmodus gemäß den Schritten a) bis c) nicht in signifikanter Weise stören kann, muss in Schritt iii) kein Fördervolumen durch den Injektor gefördert werden. Somit müssen auch keine Förderung durch den Injektor und keine Öffnung des Injektors erfolgen, wenn das in Schritt ii) berechnete Luftblasenvolumen nicht größer ist als ein maximal zulässiges Luftblasenvolumen.

Bezüglich des erfindungsgemäßen Verfahrens ist allgemein noch darauf hinzuweisen, dass die ungewollte Förderung von Reduktionsmittel in die Abgasbehandlungsvorrichtung während des Schrittes iii) zwar nachteilig ist, weil hierdurch Kosten für dieses Reduktionsmittel entstehen, jedoch keinerlei Auswirkung auf die Abgasbehandlungsqualität hat. Auch ist ein Austreten von Reduktionsmittel aus der Abgasbehandlungsvorrichtung regelmäßig nicht möglich, weil Abgasbehandlungsvorrichtungen gegen Austreten von Reduktionsmittel einen sogenannten Sperrkatalysator aufweisen, welcher in Abgasströmungsrichtung hinter den sonstigen Abgasbehandlungskomponenten das Abgasbehandlungssystem abschließt und durch welchen überschüssiges Reduktionsmittel katalysiert wird, so dass ein Austreten aus dem Abgassystem einer Verbrennungskraftmaschine nicht auftreten kann.

Dem gegenüber ist eine Bereitstellung von zu wenig Reduktionsmittel an eine Abgasbehandlungsvorrichtung im regulären Betriebsmodus während den Schritten a) bis c) problematisch, weil hierdurch Schadstoffe in die Umwelt gelangen können, welche nach geltenden Abgasnormen reduziert werden müssen.

Besonders vorteilhaft ist das erfindungsgemäße Verfahren, wenn die mindestens eine Pumpe eine pulsativ arbeitende Pumpe ist und in Schritt a) zur Feststellung eine Luftblase in der Pumpe erkannt wird, indem mindestens ein einem einzelnen Pumpenhub zuordenbares Drucksignal von mindestens einem Drucksensor erfasst und ausgewertet wird.

Aufgrund der pulsativen (stoßweisen bzw. hubweisen) Förderbewegung einer pulsativ arbeitenden Pumpe ergibt sich regelmäßig durch den Förderhub ein Druckpuls, welcher die Fördervorrichtung ausgehend von der Pumpe durchläuft. Dieser Druckpuls kann durch einen nachgelagerten Drucksensor in der Fördervorrichtung erkannt und registriert werden. Die Messung des Drucksignals am Drucksensor soll dafür wesentlich genauer und in zeitlich kürzeren Intervallen erfolgen, als dies zur Feststellung des vorliegenden Versorgungsdrucks notwendig ist. Allerdings kann durch ein derartiges Auswerten eines Druckpulses erkannt werden, ob eine Luftblase in der Pumpe vorliegt und welche Größe diese hat. Dies liegt daran, dass die Luftblase in der Pumpe wie ein elastisches Volumen wirkt, was schon eine Ausbildung eines stark ansteigenden Druckpulses in der Pumpe verhindert. Dies ermöglicht also eine Unterscheidung am Drucksensor zwischen einer Luftblase in der Pumpe und einer Luftblase, die sich vor bzw. hinter der Pumpe in einer Reduktionsmittelleitung befindet. Der Druckanstieg und/oder der Druckabfall aufgrund des Druckpulses sind beispielsweise umso steiler, je kleiner eine in der Pumpe enthaltene Luftblase ist. Dies kann zur Feststellung der Größe einer Luftblase in Schritt a) herangezogen werden.

Bei pulsativ arbeitenden Pumpen vergrößert und verkleinert sich das Volumen einer Pumpenkammer regelmäßig. Die Pumpenkammer weist einen Einlass für das Förderfluid und einen von dem Einlass getrennten Auslass auf. Der Einlass und der Auslass sind jeweils mit einem Ventil versehen. Diese Ventile geben die Förderrichtung durch die Pumpe vor, weil nur durch den Einlass das Förderfluid in die Pumpenkammer eintreten kann und nur durch den Auslass das Förderfluid aus der Pumpenkammer austreten kann. Wenn sich das Volumen der Pumpenkammer verkleinert, tritt daher Förderfluid aus dem Auslass aus. Demgegenüber wird das Förderfluid durch den Einlass angesaugt, wenn sich das Volumen der Pumpenkammer vergrößert.

Häufig verwendete pulsativ arbeitende Pumpen sind beispielsweise Kolbenpumpen oder Membranpumpen. Bei den Kolbenpumpen wird die Pumpenkammer bzw. eine Wand der Pumpenkammer teilweise von einem Pumpenkolben gebildet. Wenn der Pumpenkolben bewegt wird, verändert sich das Volumen der Pumpenkammer. Der Antrieb des Pumpenkolbens erfolgt häufig elektromechanisch. Eine elektrische Spule erzeugt dabei eine magnetische Kraft, die den Pumpenkolben auslenkt. Bei den Membranpumpen wird die Pumpenkammer bzw. eine Wand der Pumpenkammer teilweise von einer beweglichen Membran gebildet. Die Membran kann sich in die Pumpenkammer hinein bewegen und dabei das Volumen verändern. Zur Bewegung der Membran sind unterschiedliche Konzepte bekannt. Bei sogenannten Kolbenmembranpumpen wird die Bewegung eines Kolbens über ein zusätzliches Arbeitsfluid auf die Membran übertragen. Der Kolben kann hier genau so angetrieben werden, wie bei einer normalen Kolbenpumpe. Bei mechanisch ausgelenkten Membranpumpen wird die Membran direkt mechanisch angetrieben. Dies kann beispielsweise über einen Exzenter geschehen, der über eine Pleuelstange an der Membran angreift und diese bewegt, so dass sich die Pumpenkammer regelmäßig vergrößert und verkleinert.

Weiterhin vorteilhaft ist das erfindungsgemäße Verfahren, wenn die Schritte b) und c) öfter wiederholt werden als der Schritt a). Eine Luftblase in der Pumpe, welche in Schritt a) des Verfahrens festgestellt wird, ist normalerweise nicht sehr schnell abzubauen. Dies liegt daran, dass die Luftblase aufgrund von Kapillarkräften in der Pumpkammer zumindest teilweise festgehalten wird. Sie kann sich nur kontinuierlich über einen längeren Zeitraum hinweg abbauen. Für Schritt a) werden allerdings Rechenkapazitäten benötigt, so dass es sinnvoll ist, Schritt a) seltener durchzuführen als die Schritte b) und c), welche zum regulären Betriebsmodus und zur Zufuhr von Reduktionsmittel in die Abgasbehandlungsvorrichtung notwendig sind. Beispielsweise kann Schritt a) maximal jedes fünfte Mal durchgeführt werden, wenn die Schritte b) und c) ausgeführt werden.

Auch vorteilhaft ist das Verfahren, wenn die Pumpe eine pulsativ arbeitende Pumpe ist und zumindest in Schritt iii) mit einem maximalen Förderhub oder mit einer gegenüber dem regulären Betriebsmodus erniedrigten Frequenz betrieben wird. Eine Luftförderung ist für eine pulsativ arbeitende Pumpe - wie bereits ausgeführt wurde - regelmäßig problematisch. Bei maximalem Förderhub und niedrigen Förderfrequenzen ergeben sich noch die besten Bedingungen für die Luftförderung. Aus diesem Grund ist es sinnvoll, für Schritt iii) einen Betriebsmodus der Pumpe zu wählen, bei welchem gerade der maximale Förderhub ausgenutzt wird und möglicherweise gleichzeitig ein Betrieb mit einer erniedrigten Frequenz erfolgt.

Auch vorteilhaft ist das Verfahren, wenn die Schritte i) bis iii) im Rahmen der Entlüftungsprozedur mehrmals hintereinander wiederholt werden, bis in Schritt ii) die in Schritt i) bestimmte Ist-Steigung und die Soll-Steigung annähernd gleich sind. Auf diese Art und Weise kann sichergestellt werden, dass eine Luftblase sicher aus der Fördervorrichtung hinaus gefördert wurde und nach Abschluss der Entlüftungsprozedur am Injektor Reduktionsmittel bereitsteht.

Weiterhin vorteilhaft ist das Verfahren, wenn das in Schritt iii) geförderte Fördervolumen kleiner ist als das in Schritt ii) berechnete Luftblasenvolumen. Das in Schritt iii) geförderte Fördervolumen kann maximal 80 %, insbesondere maximal 90 % und besonders bevorzugt maximal 95 % des berechneten Luftblasenvolumens betragen. Auf diese Art und Weise kann sichergestellt werden, dass kein zu großer Verlust an Reduktionsmittel durch die Entlüftungsprozedur auftritt. Wenn zusätzlich die Schritte i) bis iii) der Entlüftungsprozedur mehrmals hintereinander wiederholt werden, kann sich die in Schritt i) bestimmte Ist-Steigung einer Druck-Fördervolumen-Kennlinie an die (theoretische) Soll-Steigung einer Druck-Fördervolumen-Kennlinie annähern, so dass einerseits sichergestellt ist, dass die Luftblase vollständig aus der Fördervorrichtung hinausgefördert wird und gleichzeitig ein minimaler Verlust an Reduktionsmittel auftritt.

Auch vorteilhaft ist das erfindungsgemäße Verfahren, wenn die Entlüftungsprozedur mit den Schritten i) bis iii) durchgeführt wird, wenn unmittelbar zuvor zumindest einer der folgenden Zustände vorlag:
- Erstinbetriebnahme der Fördervorrichtung,
- Befüllen des Tanks der Fördervorrichtung,
- Schrägfahrt eines Kraftfahrzeugs bei einem Füllstand des Tanks unterhalb eines Schwellwertes,
- Wechsel eines Reduktionsmittelfilters bei der Fördervorrichtung, und
- Wiederinbetriebnahme nach Einfriervorgang.

All diesen hier aufgezählten Zuständen ist gemein, dass das Risiko besteht, dass das Ansaugrohr der Fördervorrichtung im Tank aus dem Reduktionsmittel austreten kann, wodurch Luft in die Fördervorrichtung gelangen kann. Daher ist es sinnvoll, automatisch die Verfahrensschritte i) bis iii) einzuleiten, wenn zuvor einer dieser Zustände vorlag. Dies kann alternativ oder zusätzlich zur Auslösung der Entlüftungsprozedur zu vorgegebenen Zeitpunkten erfolgen.

Eine Erstinbetriebnahme der Fördervorrichtung liegt dann vor, wenn die Förderrichtung zum ersten Mal zur Förderung von Reduktionsmittel eingesetzt wird. Da der Tankvorgang ebenfalls Druckschwankungen und eine Öffnung des Systems zur Folge haben kann, ist auch (jeweils) nach dem Befüllen des Tanks die Entlüftungsprozedur hilfreich. Dies gilt in entsprechender Weise für die Reparatur bzw. den Austausch von Komponenten der Fördervorrichtung, wie z. B. beim Wechsel eines Reduktionsmittelfilters. Auch für den Fall, dass die Fördervorrichtung eine (vorbestimmte) Lage verlässt, wie z. B. bei einer aufwärts oder abwärts geneigten Lage (wie sie bei einer Schrägfahrt eines Kraftfahrzeugs auftreten kann), insbesondere dann, wenn der Tank bereits relativ viel Luft enthält, ist das Risiko für neue Luftblasen im System erhöht und ggf. eine Durchführung der Entlüftungsprozedur sinnvoll. Zudem kann das Risiko selbst bei einem geschlossenen System erhöht sein, wenn Wechsel des Aggregatzustandes des Reduktionsmittels (an verschiedenen Stellen der Fördervorrichtung) auftreten, wie z. B. nach einer Wiederinbetriebnahme der Fördervorrichtung nachdem das darin befindliche Reduktionsmittel zumindest teilweise eingefroren war, also folglich wieder aufgetaut wurde.

Auch erfindungsgemäß ist ein Kraftfahrzeug, aufweisend eine Verbrennungskraftmaschine, eine Abgasbehandlungsvorrichtung und eine Fördervorrichtung für Reduktionsmittel, wobei die Fördervorrichtung zur Zugabe eines Reduktionsmittels hin zur Abgasbehandlungsvorrichtung ausgestaltet ist und eine Steuerung aufweist, die zur Durchführung des erfindungsgemäßen Verfahrens eingerichtet ist. Auch in anderen (stationären) Maschinen, die Abgase produzieren, ist der Einsatz des erfindungsgemäßen Verfahrens möglich. Zu nennen sind hier beispielsweise Baumaschinen oder Generatoren. Die Fördervorrichtung kann dazu auch einen Injektor umfassen, mit dem das Reduktionsmittel in flüssiger Form in eine Abgasleitung vor eine Abgasbehandlungsvorrichtung (z. B. einen SCR-Katalysator und/oder einen Hydrolyse-Katalysator und/oder einen (katalytisch beschichteten) Partikelabscheider und/oder ein Mischelement) zugegeben werden. Diese Steuerung kann entweder in einem separaten Steuergerät oder innerhalb der Motorsteuerung des Kraftfahrzeuges vorhanden sein, wobei dieses ggf. auch mit entsprechenden Sensoren oder dergleichen in Verbindung steht. Dazu kann das Verfahren in einer entsprechenden Software verwirklicht sein.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Weiter ist darauf hinzuweisen, dass die Figuren, insbesondere die dargestellten Größenverhältnisse, nur schematisch sind. Es zeigen:
- Fig. 1:: ein Kraftfahrzeug, aufweisend eine erfindungsgemäße Fördervorrichtung,
- Fig. 2:: eine pulsativ arbeitende Pumpe, und
- Fig. 3:: einen schematischen Verfahrensablauf des erfindungsgemäßen Verfahrens.

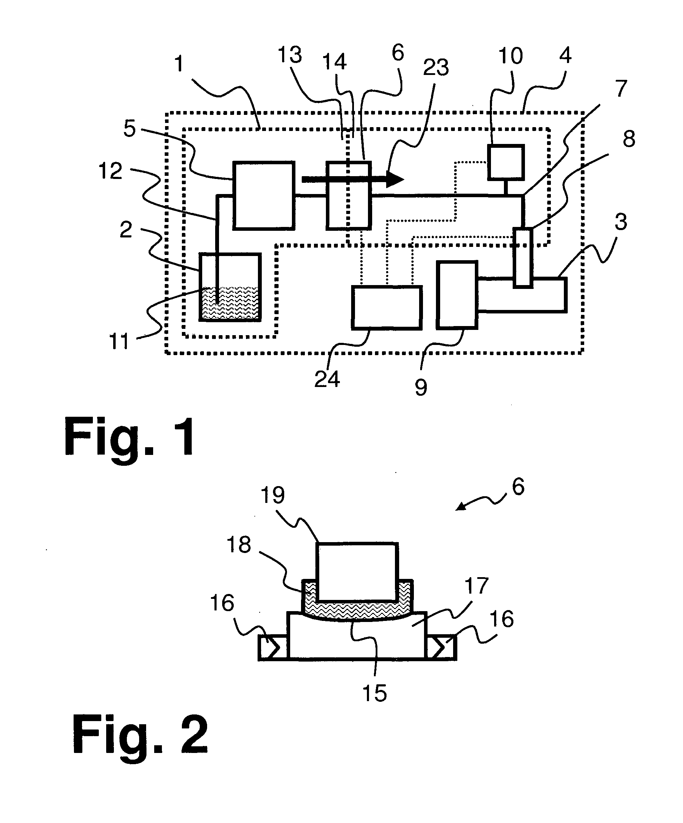

In Fig. 1 ist ein Kraftfahrzeug 4, aufweisend eine Verbrennungskraftmaschine 9 mit einer Abgasbehandlungsvorrichtung 3 und einer erfindungsgemäßen Fördervorrichtung 1 zu sehen. Die erfindungsgemäße Fördervorrichtung 1 befördert Reduktionsmittel aus einem Tank 2 über eine Reduktionsmittelleitung 7 und einen Injektor 8 mit einer Förderrichtung 23 in die Abgasbehandlungsvorrichtung 3. Aus dem Tank 2 heraus erfolgt die Förderung über ein Saugrohr 12. Das Saugrohr 12 ist derart angeordnet, dass es bei üblichen Füllständen 11 im Tank 2 innerhalb des Reduktionsmittels angeordnet ist. Entlang der Reduktionsmittelleitung 7 befinden sich in der erfindungsgemäßen Fördervorrichtung 1 in Förderrichtung 23 hintereinander ein Reduktionsmittelfilter 5, eine Pumpe 6 sowie ein Drucksensor 10. Die Fördervorrichtung 1 kann an der Pumpe 6 in einen (vorgelagerten) Saugbereich 13 und einen (nachgelagerten) Druckbereich 14 aufgeteilt werden. Eine Luftblase kann sich entweder im Saugbereich 13, im Druckbereich 14 oder in der Pumpe 6 befinden. Die Fördervorrichtung 1 wird durch eine Steuerung 24 gesteuert. Die Steuerung 24 ist zur Durchführung des erfindungsgemäßen Verfahrens eingerichtet. Das erfindungsgemäße Verfahren kann in Form einer auf der Steuerung 24 hinterlegten Software implementiert sein. Die Steuerung 24 steht zumindest mit der Pumpe 6, dem Drucksensor 10 und dem Injektor 8 in Verbindung, um von diesen Komponenten Informationen über den Zustand der Fördervorrichtung 1 zu erhalten und diese Komponenten gegebenenfalls zu steuern.

Fig. 2 zeigt eine Pumpe 6, wie sie in einer solchen Fördervorrichtung zum Einsatz kommen kann. Eine derartige Pumpe 6 weist eine Pumpkammer 17 auf, welche von einem Antrieb 19 angetrieben wird, welcher regelmäßig als Hubkolben ausgeführt ist. Zur Übertragung der Kraft des Antriebs 19 auf die Pumpkammer 17 ist regelmäßig ein Transfermedium 18 in Form eines Übertragungsfluides und eine Membran 15 vorgesehen. Durch diesen Aufbau kann ein direkter Kontakt des in der Pumpkammer 17 enthaltenen Reduktionsmittels mit dem Antrieb 19 vermieden werden. Dies ist vorteilhaft, weil insbesondere Reduktionsmittel sehr korrosiv ist und dem Antrieb 19 schaden könnte. Zur Vorgabe der Förderrichtung der Pumpe 6 weist diese Ventile 16 auf, welche in Strömungsrichtung vor und hinter der Pumpkammer 17 angeordnet sind.

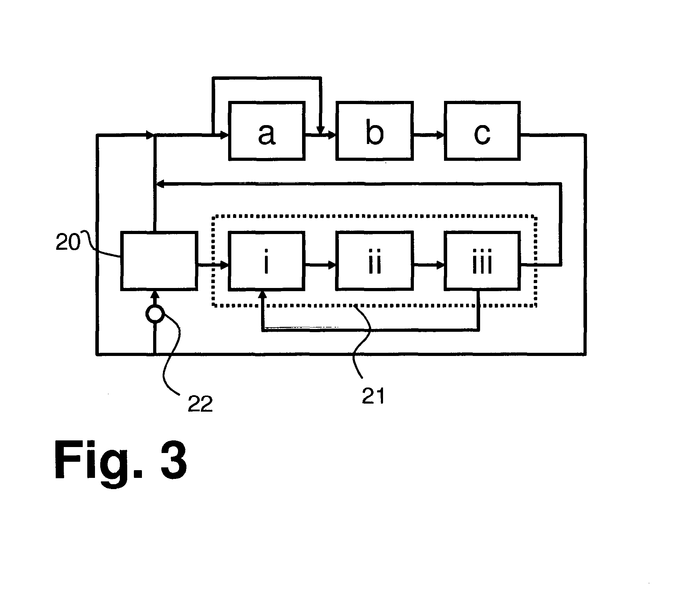

In Fig. 3 ist das erfindungsgemäße Verfahren als Diagramm mit den Verfahrensschritten a), b) und c) sowie i), ii) und iii) dargestellt. Typischerweise beginnt das Verfahren am Verfahrensstart 22. Es ist allerdings auch ein Beginn des Verfahrens an jeder beliebigen anderen Stelle des Diagramms möglich. Im regulären Betriebsmodus werden normalerweise (nur) die Verfahrensschritte a), b) und c) durchgeführt. Der Verfahrensschritt a) kann dabei gegebenenfalls auch umgangen werden, um den für das erfindungsgemäße Verfahren notwendigen Aufwand zu reduzieren. Wenn bei einer Ereignisprüfung 20 festgestellt wird, dass eine Luftblase zwischen Pumpe und Injektor in der Fördervorrichtung vorliegt, kann die Entlüftungsprozedur 21, umfassend die Verfahrensschritte i), ii) und iii) eingeleitet werden. Optional ist eine mehrmalige Wiederholung der Entlüftungsprozedur 21 möglich.

Durch das erfindungsgemäße Verfahren kann eine Vorrichtung zur Zufuhr von Reduktionsmittel in eine Abgasbehandlungsvorrichtung einer Verbrennungskraftmaschine besonders kostengünstig und einfach aufgebaut sein. Dies überwiegt bei weitem die Nachteile, die sich durch zusätzlichen Verlust an Reduktionsmittel bei der Durchführung des erfindungsgemäßen Verfahrens und insbesondere bei der Entlüftungsprozedur ergeben. Die Zustände, die eine Entlüftung einer Fördervorrichtung für ein Reduktionsmittel notwendig machen, treten selten auf und ihr Auftreten kann durch zusätzliche Maßnahmen weiter reduziert werden. Darüber hinaus haben Fördervorrichtungen typischerweise sehr kleine Gesamtvolumina. Die durch Entlüftung verloren gehenden Reduktionsmittelmengen sind durch die Gesamtvolumina begrenzt. Wenn eine Reduktionsmittelmenge durch eine Fördervorrichtung gefördert wurde, die dem Gesamtvolumen der Fördervorrichtung entspricht, ist auch sichergestellt, dass sich in der Fördervorrichtung kein Reduktionsmittel mehr befindet. Daher kann dieses Verfahren so betrieben werden, dass der Verlust an Reduktionsmittel beim Entlüften nicht größer ist als das Gesamtvolumen der Fördervorrichtung.

Fördervorrichtungen für das erfindungsgemäße Verfahren bei Personenkraftwagen haben vorteilhafterweise ein Gesamtvolumen von weniger als 150 ml [Milliliter] und vorzugsweise sogar weniger als 100 ml. Hiervon ist sowohl die Fördereinheit selbst mit den einzelnen Komponenten, wie Saugrohr, Pumpe, Filter, Sensoren und Ventilen als auch die der Verbindungsleitungsabschnitt bis hin zum Injektor mit umfasst. Es ist also dass ganze mit flüssigem Reduktionsmittel gefüllte Volumen gemeint, welches nicht zum Tank und nicht zur Abgasbehandlungsvorrichtung gehört. Bei dieser Betrachtungsweise haben Fördervorrichtungen für das vorgeschlagene Verfahren bei Lastkraftwagen bevorzugt ein Gesamtvolumen von weniger als 350 ml, vorzugsweise weniger als 300 ml. Ein Großteil dieses Volumens entfällt auf den Verbindungsleitungsabschnitt von den Komponenten der Fördereinheit zu dem Injektor. Die Länge und damit das Volumen dieses Verbindungsleitungsabschnittes hängen von der Position der Fördereinheit im Kraftfahrzeug und dem Abstand der Fördereinheit zu der Abgasbehandlungsvorrichtung im Kraftfahrzeug ab. Bevorzugt ist der Verbindungsleitungsabschnitt weniger als 4 m [Meter] lang und hat einen durchströmbaren Durchmesser von weniger als 3,5 mm [Millimeter].

Die Mengen an Reduktionsmittel, die bei der Entlüftung in das Abgas gelangen, sind aufgrund der begrenzten Volumina gegenüber den erläuterten Vorteilen und dem einfacheren Aufbau, die durch das erfindungsgemäße Verfahren ermöglicht werden, vertretbar.

Das erfindungsgemäße Verfahren ist auch für Fördervorrichtungen geeignet, die das Reduktionsmittel nicht direkt in eine Abgasbehandlungsvorrichtung fördern, sondern bei denen das Reduktionsmittel zunächst nur in eine Mischkammer gefördert wird. In dieser Mischkammer wird das Reduktionsmittel zunächst mit einem Gas, beispielsweise Druckluft, vermischt. Das Gemisch aus Gas und Reduktionsmittel wird anschließend einer Abgasbehandlungsvorrichtung zugeführt. Bei solchen Fördervorrichtungen kann der Verbindungsleitungsabschnitt von der Fördereinheit zu dem Injektor in die Mischkammer erheblich kürzer ausgeführt sein, weil die Mischkammer nicht unmittelbar an der Abgasbehandlungsvorrichtung angeordnet zu sein braucht, sondern eine zusätzliche Verbindungsleitung von der Mischkammer zu der Abgasbehandlungsvorrichtung vorgesehen sein kann. Bei solchen Fördervorrichtungen ist es daher möglich, dass das Gesamtvolumen kleiner als 90 ml und vorzugsweise sogar kleiner als 30 ml ist. Beispielsweise liegt das Gesamtvolumen zwischen 5 ml bis 25 ml. Hierbei werden die Mischkammer und die Leitung von der Mischkammer zur Abgasbehandlungsvorrichtung nicht mitgerechnet.

### Bezugszeichenliste

- 1: Fördervorrichtung
- 2: Tank
- 3: Abgasbehandlungsvorrichtung
- 4: Kraftfahrzeug
- 5: Reduktionsmittelfilter
- 6: Pumpe
- 7: Reduktionsmittelleitung
- 8: Injektor
- 9: Verbrennungskraftmaschine
- 10: Drucksensor
- 11: Füllstand
- 12: Saugrohr
- 13: Saugbereich
- 14: Druckbereich
- 15: Membran
- 16: Ventil
- 17: Pumpkammer
- 18: Transfermedium
- 19: Antrieb
- 20: Ereignisprüfung
- 21: Entlüftungsprozedur
- 22: Verfahrensstart
- 23: Förderrichtung
- 24: Steuerung

## Patentansprüche

1. Verfahren zum Betrieb einer Fördervorrichtung (1) für ein Reduktionsmittel mit einem Tank (2) für ein flüssiges Reduktionsmittel, einem Injektor (8) zur Zugabe des flüssigen Reduktionsmittel in eine Abgasbehandlungsvorrichtung (3) einer Verbrennungskraftmaschine (9) und einer Reduktionsmittelleitung (7), die vom Tank (2) zum Injektor (8) verläuft, in welcher mindestens eine Pumpe (6) zur Förderung von Reduktionsmittel mit einer Förderrichtung (23) vom Tank (2) zum Injektor (8) und mindestens ein Drucksensor (10) angeordnet sind, aufweisend zumindest folgende Schritte:
a) Feststellen und Bereitstellen eines geeigneten und mit der Pumpe (6) erreichbaren Versorgungsdrucks für den Injektor (8) in der Fördervorrichtung (1);
b) Berechnen einer Injektoröffnungszeit aus einer festgelegten Einspritzmenge und dem erreichbaren Versorgungsdruck; und
c) Öffnen des Injektors (3) mit der berechneten Injektoröffnungszeit,
**dadurch gekennzeichnet, dass** zu einem vorgegebenen Zeitpunkt eine Entlüftungsprozedur durchgeführt wird, aufweisend zumindest die folgenden Schritte:
i) Bestimmen einer Ist-Steigung einer Druck-Fördervolumen-Kennlinie in der Fördervorrichtung;
ii) Berechnen eines Luftblasenvolumens durch Vergleich der bestimmten Steigung mit einer Soll-Steigung; und
iii) Fördern eines Fördervolumens durch den Injektor (8), wenn das in Schritt ii) berechnete Luftblasenvolumen größer ist als ein maximal zulässiges Luftblasenvolumen.

2. Verfahren nach Patentanspruch 1, wobei die mindestens eine Pumpe (6) eine pulsativ arbeitende Pumpe (6) ist und in Schritt a) eine Luftblase in der Pumpe (6) erkannt wird, indem mindestens ein einem einzelnen Pumpenhub zuordenbares Drucksignal vom mindestens einen Drucksensor (10) erfasst und ausgewertet wird.

3. Verfahren nach einem der vorhergehenden Patentansprüche, wobei die Schritte b) und c) öfter wiederholt werden als der Schritt a).

4. Verfahren nach einem der vorhergehenden Patentansprüche, wobei die Pumpe (6) eine pulsativ arbeitende Pumpe (6) ist und zumindest in Schritt iii) mit einem maximalen Förderhub oder mit einer gegenüber dem regulären Betrieb erniedrigten Frequenz betrieben wird.

5. Verfahren nach einem der vorhergehenden Patentansprüche, wobei die Schritte i) bis ii) im Rahmen der Entlüftungsprozedur mehrmals hintereinander wiederholt werden bis die in Schritt i) bestimmte Steigung und die theoretische Steigung annähernd gleich sind.

6. Verfahren nach einem der vorhergehenden Patentansprüche, wobei das in Schritt iii) geförderte Fördervolumen kleiner ist als das in Schritt ii) berechnete Luftblasenvolumen.

7. Verfahren nach einem der vorhergehenden Patentansprüche, wobei die Entlüftungsprozedur mit den Schritten i) bis iii) durchgeführt wird, wenn unmittelbar zuvor zumindest einer der folgenden Zustände vorlag:
- Erstinbetriebnahme der Fördervorrichtung (1);
- Befüllung des Tankes (2) der Fördervorrichtung (1);
- Schrägfahrt eines Kraftfahrzeuges (4) bei einem Füllstand (11) des Tankes (2) unterhalb eines Schwellwertes; und
- Wechsel eines Reduktionsmittelfilters (5) bei der Fördervorrichtung (1), und
- Wiederinbetriebnahme nach Einfriervorgang.

8. Kraftfahrzeug (4), aufweisend eine Verbrennungskraftmaschine (9), eine Abgasbehandlungsvorrichtung (3) und eine Fördervorrichtung (1) für Reduktionsmittel, wobei die Fördervorrichtung (1) zur Zugabe eines Reduktionsmittels hin zur Abgasbehandlungsvorrichtung (3) ausgestaltet ist und eine Steuerung (24) aufweist, die zur Durchführung eines Verfahrens nach einem der vorhergehenden Patentansprüche eingerichtet ist.

## Claims

1. Method for operating a delivery device (1) for a reducing agent having a tank (2) for a liquid reducing agent, an injector (8) for supplying the liquid reducing agent to an exhaust gas treatment device (3) of an internal combustion engine (9) and a reducing agent line (7), which runs from the tank (2) to the injector (8) and in which at least one pump (6) for delivering reducing agent in a delivery direction (23) from the tank (2) to the injector (8), and at least one pressure sensor (10) are arranged, the method comprising at least the following steps:
a) determining and providing a supply pressure for the injector (8) in the delivery device (1) which is appropriate and achievable with the pump (6);
b) calculating an injector opening time from a defined injection quantity and the achievable supply pressure; and
c) opening the injector (3) for the calculated injector opening time, **characterized in that** at a predefined point in time, an air removal procedure is carried out, comprising at least the following steps:
i) determining an actual slope of a pressure/delivery volume characteristic in the delivery device;
ii) calculating an air bubble volume by comparing the determined slope to a target slope; and
iii) delivering a delivery volume through the injector (8) if the air bubble volume calculated in step ii) is greater than a maximum permissible air bubble volume.

2. Method as claimed in claim 1, wherein the at least one pump (6) is a pump (6) which operates in a pulsed manner, and an air bubble in the pump (6) is detected in step a) by using the at least one pressure sensor (10) to detect and evaluate at least one pressure signal that can be associated with a single pump stroke.

3. Method as claimed in one of the preceding claims, wherein steps b) and c) are repeated more frequently than step a).

4. Method as claimed in one of the preceding claims, wherein the pump (6) is a pump (6) which operates in a pulsed manner and, at least in step iii), is operated with a maximum delivery stroke or at a reduced frequency relative to regular operation.

5. Method as claimed in one of the preceding claims, wherein steps i) to ii) are repeated several times in succession as part of the air removal procedure until the slope determined in step i) and the theoretical slope are approximately equal.

6. Method as claimed in one of the preceding claims, wherein the delivery volume delivered in step iii) is less than the air bubble volume calculated in step ii).

7. Method as claimed in one of the preceding claims, wherein the air removal procedure is carried out by means of steps i) to iii) if at least one of the following states was present immediately prior to this:
- initial startup of the delivery device (1);
- filling of the tank (2) of the delivery device (1);
- a motor vehicle (4) is traveling at an oblique angle while a filling level (11) in the tank (2) is below a threshold value; and
- changing of a reducing agent filter (5) in the delivery device (1), and
- restarting after a freezing process.

8. Motor vehicle (4) having an internal combustion engine (9), an exhaust gas treatment device (3) and a delivery device (1) for reducing agent, wherein the delivery device (1) is designed to supply a reducing agent toward the exhaust gas treatment device (3) and has a controller (24), which is set up to carry out a method as claimed in one of the preceding claims.

## Revendications

1. Procédé de fonctionnement d'un dispositif d'alimentation (1) d'un agent réducteur comportant un réservoir (2) pour un agent réducteur liquide, un injecteur (8) pour introduire l'agent réducteur liquide dans un dispositif de traitement des gaz d'échappement (3) d'un moteur à combustion interne (9) et une conduite d'agent réducteur (7), qui s'étend du réservoir (2) jusqu'à l'injecteur (8), dans laquelle au moins une pompe (6) pour alimenter l'agent réducteur avec un dispositif d'alimentation (23) du réservoir (2) jusqu'à l'injecteur (8) et au moins un capteur de pression (10) sont disposés, présentant au moins les étapes suivantes consistant à :
a) déterminer et fournir une pression d'alimentation appropriée pouvant être atteinte avec la pompe (6) pour l'injecteur (8) dans le dispositif d'alimentation (1) ;
b) calculer un temps d'ouverture d'injecteur d'après une quantité d'injection déterminée et la pression d'alimentation pouvant être atteinte ; et
c) ouvrir l'injecteur (3) avec le temps d'ouverture d'injecteur calculé,
**caractérisé en ce qu'**à un point temporel prescrit une procédure de purge d'air est effectuée, présentant au moins les étapes suivantes consistant à :
i) déterminer une augmentation effective d'une ligne caractéristique de volume d'alimentation de pression dans le dispositif d' alimentation ;
ii) calculer un volume de soufflage d'air en comparant l'augmentation déterminée avec une augmentation de consigne ; et
iii) alimenter un volume d'alimentation à travers l'injecteur (8), quand le volume de soufflage d'air calculé à l'étape ii) est plus grand qu'un volume de soufflage d'air autorisé maximal.

2. Procédé selon la revendication 1, dans lequel l' au moins une pompe (6) est une pompe (6) fonctionnant par impulsions et à l'étape a) une soufflage d'air est reconnu dans la pompe (6), en détectant et évaluant au moins un signal de pression de l'au moins un capteur de pression (10) pouvant être affecté à une course de pompe individuelle.

3. Procédé selon une des revendications précédentes, dans lequel les étapes b) et c) sont répétées plus souvent que l'étape a).

4. Procédé selon une des revendications précédentes, dans lequel la pompe (6) est une pompe (6) fonctionnant par impulsions et est mise en fonctionnement au moins à l'étape iii) avec une course d'alimentation maximale ou avec une fréquence réduite par rapport au fonctionnement normal.

5. Procédé selon une des revendications précédentes, dans lequel les étapes i) et ii) sont répétées plusieurs fois l'une derrière l'autre dans le cadre de la procédure de purge d'air jusqu'à ce que l'augmentation déterminée à l'étape i) et l'augmentation théorique soient approximativement identiques.

6. Procédé selon une des revendications précédentes, dans lequel le volume d'alimentation alimenté à l'étape iii) est plus petit que le volume de soufflage d'air calculé à l'étape ii).

7. Procédé selon une des revendications précédentes, dans lequel la procédure de purge d'air est effectuée avec les étapes i) à iii) quand se présente directement avant au moins un des états suivants :
- première mise en service du dispositif d'alimentation (1) ;
- remplissage du réservoir (2) du dispositif d'alimentation (1) ;
- conduite en dévers d'un véhicule automobile (4) en présence d'un niveau de remplissage (11) du réservoir (2) inférieur à une valeur seuil ; et
- remplacement d'un filtre d'agent réducteur (5) sur le dispositif d'alimentation (1), et
- remise en service après un processus de congélation.

8. Véhicule automobile (4), présentant un moteur à combustion interne (9), un dispositif de traitement des gaz d'échappement (3) et un dispositif d'alimentation (1) d'agent réducteur, dans lequel le dispositif d'alimentation (1) est conçu pour introduire un agent réducteur jusqu' au dispositif de traitement des gaz d'échappement (3) et présente une unité de commande (24) qui est conçue afin de mettre en oeuvre un procédé selon une des revendications précédentes.
